**Europäisches Patentamt**

**European Patent Office**

**Office européen des brevets**

(19)

(11) Publication number : **0 409 667 B1**

## (12) EUROPEAN PATENT SPECIFICATION

(45) Date of publication of patent specification :
**14.12.94 Bulletin 94/50**

(51) Int. Cl.[5] : **G02C 7/06**

(21) Application number : **90308035.6**

(22) Date of filing : **23.07.90**

(54) **Multifocal optical lens.**

(30) Priority : **21.07.89 US 383797**

(43) Date of publication of application :
**23.01.91 Bulletin 91/04**

(45) Publication of the grant of the patent :
**14.12.94 Bulletin 94/50**

(84) Designated Contracting States :
**AT BE CH DE DK ES FR GB IT LI LU NL SE**

(56) References cited :
**FR-A- 2 600 174**
**JP-A- 1 152 107**

(56) References cited :
**PATENT ABSTRACTS OF JAPAN, vol. 9, no.
330 (M-442)[2053], 25th December 1985; &
JP-A-60 162 611**
**PATENT ABSTRACTS OF JAPAN, vol. 10, no.
22 (P-424)[2079], 28th January 1986; & JP-A-60
175 009**

(73) Proprietor : **IOPTEX RESEARCH INC.**
**15715 Arrow Highway**
**Irwindale, California 91706-2094 (US)**

(72) Inventor : **Gupta, Amitava**
**1606 Virginia Road**
**San Marino, California (US)**

(74) Representative : **Gilholm, Stephen Philip**
**Corporate Patents Department**
**Smith & Nephew Group Research Centre**
**York Science Park**
**Heslington York YO1 5DF (GB)**

## Description

The present invention relates to multifocal lens which are suitable for use as a contact lens or can be implanted as an intraocular lens and which lens are free of discontinuities between adjacent focal zones.

Currently available multifocal optical lenses have discontinuities such as lines of demarcation between adjacent zones of different refractive indices. These discontinuities cause incident light to be scattered causing undesirable glare and aberration.

United States Patent No. 3472581 describes a multifocal lens which is produced by machining a lens from a disc made of two materials of different refractive indices which have been fused together. At the junction between the two materials, there is a discontinuity which results in a scattering plane for incidental light which thus produces undesirable glare for the user.

United States Patent No. 3560598 describes forming a two component disc by the sequential polymerisation of two materials of differing refractive index. These polymeric material, however, have a line of demarcation therebetween. Thus, incident light is scattered at the interface junction.

The present invention seeks to overcome these prior art difficulties in providing a multifocal lens having a plurality of zones and in which there are no discontinuities in the refractive indices between the zones which are visible to the human eye.

The present invention, therefore, comprises a multifocal lens suitable for use as a contact lens or an implantable intraocular lens which comprises first, second and third zones comprising transparent polymeric materials having a first, second and third refractive index respectively, the third zone being between the first and second zones and having a refractive index continuously varying between the first and second index, so that no discontinuity in the refractive index occurs between the three zones characterised in that the polymeric materials comprise at least two monomers common to the monomer mixture of the polymeric materials comprising the first and second zones, the monomers being present in different molar proportions; and the first zone being an annular outer zone and the second zone being an inner zone.

The refractive index of the third zone, intermediate the first and second zones is continuously variable and will vary between that of the first and second zones depending on the point at which it is determined.

The term discontinuity as used herein referring to discontinuities between adjacent zones according to prior art lenses, refers to the presence of something which causes the scattering of light, glare and/or a distortion of image or discomfort to the person wearing the lens. Examples of typical discontinuities include the above, as well as, visible lines between adjacent zones.

FR-A-2600174 discloses a multifocal point lens comprising a first synthetic resin layer having a fixed refractive index, a second synthetic resin layer having a substantially fixed refractive index different from the refractive index of the first synthetic resin layer, and a third synthetic resin layer existing between the first and second synthetic resin layer and having a refractive index gradient varying continuously from the refractive index of the first synthetic resin layer to that of the second synthetic resin layer, part of the second synthetic resin layer and part of the third synthetic resin layer together being recessed into the first synthetic resin layer.

In accordance, with one embodiment of the invention the multifocal lens comprises at least 3 zones, the first zone comprising a polymer of a first specified refractive index, the second zone comprising a polymer having at least two monomers common to the monomer mixture of the polymeric materials comprising the first zone and having a second specified refractive index which differs from the first refractive index by not more than 0.1 and by not less than 0.01 and the third zone between the first and second zones comprising a polymer having at least two mononers common to the monomer mixture of the polymeric materials comprising the first and second zones and having a third refractive index which is continuously variable between that of the first and second refractive indices, said zones being transparent and having no discontinuities visible to the human eye between the zones.

The lenses of the invention may comprise more than three zones.

According to a further embodiment of the present invention, the multifocal lens comprises five zones wherein the fourth zone is adjacent the second zone and comprises a polymer having at least two mononers common to the monomer mixture of the polymeric materials comprising the first and second zones and has a specified refractive index differing from the refractive index of the polymer comprising the second zone by not more than 0.1 and by not less than 0.02 and the fifth zone between the second and fourth zones comprising a polymer having at least two mononers common to the monomer mixture of the polymeric materials comprising the first, second and fourth zones and having a refractive index continuously variable between that of the polymer comprising the second zone and that of the polymer comprising the fourth zone.

Based on technology presently available, there is not believed to be any advantage to having more than seven zones. Where the multifocal lens of the present invention is constructed having seven zones the fourth zone is adjacent the second zone and comprises a polymer having at least two mononers common to the monomer mixture of the polymeric materials comprising the first and second zones and has a specified refractive index differing from the refractive index of the polymer comprising the second zone by not more than 0.1 and by not less than 0.02. The fifth zone between the second and fourth zones comprises a polymer having at least two monomers common to the monomer mixture of the polymeric materials comprising the first, second and fourth zones, and has a refractive index continuously variable between that of the polymer comprising the second zone and that of the polymer comprising the fourth zone. The sixth zone is adjacent the fourth zone and comprises a polymer having the same repeating units as the polymer comprising the first, second and fourth zones and has a specified refractive index differing from the refractive index of the polymer comprising the fourth zone by not more than 0.1 and by not less than 0.02. The seventh zone is between the fourth and sixth zones and comprises a polymer having the same repeating units as the first, second, fourth and sixth zones and has a refractive index continuously variable between that of the polymer comprising the fourth zone and that of the polymer comprising the sixth zone.

It is important that the refractive index of the polymer comprising the adjacent zones differs by aptly not more than 0.1 and by not less than 0.01. Preferably the refractive indices differ by not more than 0.05 and by not less than 0.02.

Preferably the specified refractive index of the polymer of the first and second zones differ by not more than 0.05 and by not less than 0.02.

Where the lens contains more than three zones the specified refractive index of the polymer of the second and fourth zones preferably differs by not more than 0.05 and by not less than 0.02.

Similarly where the lens contains more than five zones it is preferred that the specified refractive index of the polymer of the fourth and sixth zones differ by not more than 0.05 and by not less than 0.02.

As described above, the polymer comprising each zone comprises a mixture of at least two monomers.

Aptly each zone comprises a mixture of two monomers in a mole ratio of 80:20 to 20:80, preferably 70:30 to 30:70. In those cases where each zone comprises a mixture of three or more monomers, at least two of the monomers are the same in adjacent zones and are present in the above noted mole ratios.

The polymers comprising each zone may have a particle size less than 100 namometers.

Preferred monomers for the polymers to be used in the lens of the present invention include methyl methacrylate, cyclohexyl methacrylate and trifluoro-ethyl methacrylate.

The present invention also comprises a method of making a multifocal lens according to any one of the preceding claims which comprises polymerising at least two monomers $M_1$ and $M_2$ to form a polymer in sheet form, comprising a first and second zone having a first refractive index, excising material from the first zone, and replacing the excised material by adding a mixture of monomers which contain at least monomers $M_1$ and $M_2$ in a mole ratio sufficient upon polymerisation to form a polymer having a refractive index which differs from the refractive index of the polymer comprising the first zone by not more than 0.1 and by not less than 0.01 whereby a third zone forms between the first and second zones comprising a polymer having at least two mononers common to the monomer mixture of the polymeric material comprising the first and second zones and having a refractive index continuously variable between that of the polymer comprising the first zone and that of the polymer comprising the second zone the at least three zones being transparent and having no visible discontinuities between adjacent zones.

The second zone is created by excising material from the first zone and replacing the excised material with the second polymer. Subsequent zones may be produced in a similar manner. The excised initially polymerised material may be removed by any suitable technique such as cutting discs, drilling or otherwise forming a pattern or cavity of patterns which are filled by subsequent monomers of the type above described. Thus, after forming the initial sheet of the polymer and forming a cavity or pattern of cavities to form additional zones, the mixture of at least two monomers wherein at least two monomers are common to the adjacent zone is used to fill each subsequent cavity until the desired number of zones are produced.

The resulting completed sheet with a plurality of filled cavities therein comprising zones, may then be cut or otherwise machined to form a contact lens or an intraocular lens. In the case of an intraocular lens the lens may have haptics secured thereto according to conventional techniques or the intraocular lens may be formed with integral haptics according to conventional techniques.

Table 1 below lists representative acrylic polymers and their refractive indices which polymers are useful according to the present invention. The refractive index of any copolymer can be calculated from this Table.

The lens of the present invention may be formed by forming a blank, for example in the form of a sheet, comprising the first polymer. The material forming the blank comprises the first zone.

## Table 1

| Polymer | Refractive Index of Polymer |
|---|---|
| Poly(methyl acrylate) | 1.475 |
| Poly(ethyl acrylate) | 1.468 |
| Poly(ethylhexyl acrylate) | 1.465 |
| Poly(n-butyl acrylate) | 1.463 |
| Poly(trifluoro-ethyl acrylate) | 1.407 |
| Poly(methyl methacrylate) | 1.490 |
| Poly(ethyl methacrylate) | 1.495 |
| Poly(trifluoro-ethyl methacrylate) | 1.437 |
| Poly(n-butyl methacrylate) | 1.483 |
| Poly(cyclohexyl methacrylate) | 1.507 |
| Poly(benzyl methacrylate) | 1.568 |

The selected monomers may be combined with a free radical initiator such as USP245. (USP245 is believed to be a member of the class of aliphatic peroxides and comprises (2,5-dimethyl-2,5-bis)2-ethyl hexoyl peroxy hexane). For example 0.45gm of iniator may be mixed with 100gm of the monomer mixture. The mixture can then be deaerated and poured into a glass mould consisting of tempered glass plates separated by a flexible gasket. The monomer mixture may be polymerised by holding the filled mould in a convection oven at about 55°C for 16 hours and then at about 90°C for 24 hours. After cooling, the resultant clear monomer sheet may be removed from the mould and appropriate size disc, for example, size 16 mm size disc may be cut therefrom depending upon the number of zones desired. The discs may be cut therefrom by any suitable technique. A disc can be cut into the form of a cone or truncated cone. The mould may comprise small upper and lower tempered plates separated and bounded by a flexible gasket and the cut disc may be placed in the mould with the upper surface exposed to receive a second monomer mixture. The second monomer mixture which comprises at least two monomers common to the first monomer mixture may be formed as above described for the first monomer mixture. A cavity or zone in the first monomer sheet may be filled with a second monomer mixture and the second monomer mixture can be allowed to swell within the mould at room temperature for about 30 minutes under 1 atmosphere (101325Pa) of dry nitrogen. The second monomer mixture may then be polymerised in the same manner as for the first monomer mixture at a temperature of from about 60° to 65°C. Subsequent zones are formed and filled as above described with monomer mixtures wherein at least two monomers of the mixture are common to the monomer mixture of the adjacent zone or cavity.

Thus, for example, the first mixture of monomers may comprise poly(methyl methacrylate) 0.8 and co-(trifluoroethyl methacrylate) 0.2 and the second monomer mixture would comprise the same mixture of monomers but in a slightly different molar proportion. The resulting disc would have a constant gradient of refractive index ranging from about 1.507 to 1.437. An intraocular lens fabricated from the disc and designed to have a power of about 11.3 diopters at the other end.

The invention will be further described with reference to the accompanying drawings in which:

Fig. 1 is a view of a three zone multifocal lens according to the present invention;

Fig. 2 shows a five zone multifocal lens according to the present invention; and

Fig. 3 is an expanded view of the third zone of the three zone multifocal lens according to the present invention.

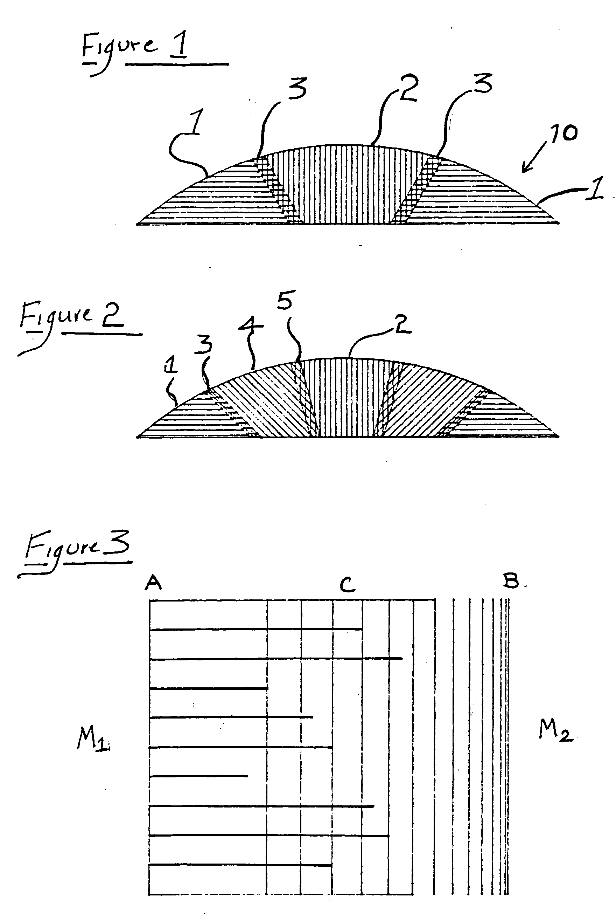

Referring to Figure 1 of the drawings a plano-convex lens 10 comprises a first annular outer zone 1 formed of a first polymer and a second innner inverted frusto-conical zone 2 formed from a second polymer. The polymer comprising the first and second zones have the same monomers common to the monomer mixture of the polymeric materials, but have different refractive indices.

An annular third zone 3 is formed intermediate the first and second zones, the refractive index of which will vary from that of the first zone at the interface between the first and third zones and that at the interface between the second and third zones.

In the five zone lens shown in Figure 2, the annular third zone 3 is immediately adjacent the outer annular zone 1. However, the inner frusto-conical zone 2 is surrounded by another annular zone 4 which is formed from a polymer which has the same repeating units as the first and second zones. This fourth zone has a different refractive index to that of the first and second zones.

Lying intermediate the second and fourth zones is an annular zone 5. This fifth zone has a refractive index, depending upon the point of measurement, which varies between that of the second zone at its interface with the fifth zone and that of the fourth zone at its interface with the fifth zone.

Figure 3 is a schematic representation of the third (or fifth) zone. The line A represents the interface between the first and third zones and line B, the interface between the third and second zones. The distance between points A and B being the thickness of zone 3. The horizontal lines schematically depict the amount of a polymer $M_1$ in the third zone at given points between A and B. The vertical lines schematically show the concentration of polymer $M_2$ at given points in the third zone between B and A.

The 'concentration gradient' of $M_1$ decreases from A to B. Similarly the 'concentration gradient' of $M_1$ falls from A to B. The refractive index through zone 3 changes from that of the polymer in zone 1 at A to that of the polymer comprising zone 2 at B. The refractive index at a line through point C is there a function of the monomeric constituents which make up the polymer $M_1$-$M_2$ at that point.

The following examples are given to illustrate the present invention.

Example 1

A monomer formulation consisting of purified methyl methacrylate (95g), trifluoroethyl methacrylate (40g) 2-hydroxy 4-ethoxyacryloxy benzophenone (1.5g) and ethylene glycol dimethacrylate (2.5g) was mixed with USP245 free radical initiator such as USP245 (0.25g), then cast into a clear polymer sheet using thermal initiation. The monomer mixture was deaerated by bubbling high purity nitrogen gas through it for five minutes then poured into a mould consisting of two sheets of tempered glass separated by a flexible gasket. The mould was clamped at the edges and was placed in a bag which was flushed with nitrogen. The bag containing the mould was placed in a convection oven set at 55°C. The polymerisation was complete in 16 hours. Following this reaction, the temperature of the oven was increased to 90°C, and the mould was held at this temperature for 24 hours. Then the oven was switched off and the mould opened to obtain the clear polymer sheet. 16mm discs were machined from the sheet. The discs were milled to form cavities of conical cross-section therein. The cavities were filled with a deoxygenated liquid monomer mixture of methyl methacrylate (40g) trifluoroethyl methacrylate (98g), 2-hydroxy-4-ethyoxyacryloxy benzophenone (1.5g) and a free radical initiator (0.5g) such as USP245.

The discs were placed between mould plates, and thermally polymerised. Following polymerisation, a one piece, intraocular lens was fabricated from each disc. The lenses had a refractive index gradient at their central zones. In such zones, the power of the lenses decreased continuously and smoothly until at their centres it reached a value of 0.63 times the power at their edges. In other words, a 20 diopter lens had a power at its centre equal to 12.6 diopters. The third zone is formed by an interpenetrating network of the monomers which thus produces a zone between the first and second zones having a refractive index continuously variable between that of the polymer comprising the first zone and that of the polymer comprising the second zone.

Example 2

A clear polymer sheet was cast by polymerisation (as previously described) from the formulation described below:

```
cyclohexyl methacrylate (monomer A)           80g

trifluoroethyl methacrylate (monomer B)     13.5g

ethylene glycol dimethacrylate            0.2 - 1.5g

(cross-linking agent)

2-hydroxy 2-ethoxyacryloxy benzophenone      1.5g

  (UV absorber)

Free radical initiator (eg. USP245)          0.5g
```

The sheet was cut into discs each with one or more cavities therein. The cavities were filled with the formulation described below:

```
cyclohexyl methacrylate (monomer A)             40g

trifluoroethyl methacrylate (monomer B)         56g

ethylene glycol dimethacrylate            0 - 1.5g

(cross-linking agent)

2-hydroxy 2-ethoxyacryloxy benzophenone        1.5g

  (UV absorber)

Free radical initiator (eg. USP245)            0.5g
```

The zones or cavities formed in the first sheet were then filled as above described and the monomer mixtures in the desired mole ratios were polymerised to form up to seven zones. In the case of the seven zone multifocal lens, the zones or cavities are drilled for the first, second, fourth and sixth zones and the third, fifth and seven zones are formed as above described between the first and second, second and fourth and fourth and sixth zones respectively.

## Claims

1. A multifocal lens (10) suitable for use as a contact lens or an implantable intraocular lens which comprises first (1), second (2) and third (3) zones comprising transparent polymeric materials having a first, second and third refractive index respectively, the third zone (3) being between the first and second zones and having a refractive index continuously varying between the first and second index, so that no discontinuity in the refractive index occurs between the three zones characterised in that the polymeric materials comprise at least two monomers common to the monomer mixture of the polymeric materials comprising the first and second zones, the monomers being present in different molar proportions, the first zone being an annular outer zone and the second zone being an inner zone.

2. A multifocal lens according to claim 1 wherein the second refractive index differs from the first refractive index by not more than 0.1 and by not less than 0.01.

3. A multifocal lens according to claim 1, or claim 2 comprising a fourth and fifth zone, wherein the fourth zone surrounds the second zone and comprises a polymer of a fourth refractive index comprising at least two monomers common to the monomer mixture of the polymeric materials comprising the first and second zones, said fourth refractive index differing from the second refractive index by not more than 0.1 and by not less than 0.02; and the fifth zone is between the second and fourth zones and comprises a polymer having at least two monomers common to the monomer mixture of the polymeric materials comprising the first, second and fourth zones and having a refractive index whose value is continuously variable between that of the second refractive index and that of the fourth refractive index.

4. A multifocal lens according to claim 3 comprising a sixth and a seventh zone, wherein the sixth zone is between the first and the fourth zone and comprises a polymer comprising at least two mononers common to the monomer mixture of the polymeric materials comprising the first, second and fourth zones and having a sixth refractive index differing from the fourth refractive index by not more than 0.1 and by not less than 0.02; and the seventh zone is between the fourth and sixth zones and comprises a polymer comprising at least two monomers common to the monomer mixture of the polymeric materials comprising the first, second, fourth and sixth zones and having a seventh refractive index which is continuously variable between that of the fourth refractive index and that of the sixth refractive index.

5. A multifocal lens according to any one of the preceding claims wherein said first and second refractive indices differ by not more than 0.05 and by not less than 0.02.

6. A multifocal lens according to any one of claims 3 to 5 wherein the second and fourth refractive indices differ by not more than 0.05 and by not less than 0.02.

7. A multifocal lens according to any one of claims 4 to 6 wherein the fourth and sixth refractive indices differ by not more than 0.05 and by not less than 0.02.

8. A multifocal lens according to any one of the preceding claims wherein two of the monomers are present in a mole ratio of 80:20 to 20:80.

9. A multifocal lens according to claim 8 wherein two of the monomers are present in a mole ratio of 70:30 to 30:70.

10. A multifocal lens according to any one of the preceding claims wherein the polymeric material comprising each zone comprises a mixture of three monomers wherein at least two of the three monomers are monomers common to the monomer mixture of polymeric material comprising the zones.

11. A multifocal lens according to any one of the preceding claims wherein the polymer comprising each zone has a particle size of less than 100 nanometers.

12. A multifocal lens according to any one of claims 8 to 11 wherein one monomer is methyl methacrylate and a second monomer is trifluoro-ethylmethacrylate.

13. A multifocal lens according to any one of claims 8 to 12 wherein one monomer is cyclohexyl methacrylate and a second monomer is tri-fluoroethylmethacrylate.

14. A method of making a multifocal lens according to any one of the preceding claims which comprises polymerising at least two monomers $M_1$ and $M_2$ to form a polymer in sheet form, comprising a first zone having a first refractive index, excising material from the first zone, and in order to form a second zone replacing the excised material by adding a mixture of monomers which contains at least monomers $M_1$ and $M_2$ in a mole ratio sufficient upon polymerisation to form a polymer having a refractive index which differs from the refractive index of the polymer comprising the first zone by not more than 0.1 and by not less than 0.01 whereby a third zone is formed between the first and second zones comprising a polymer having at least two mononers common to the monomer mixture of the polymeric materials comprising the first and second zones and having a refractive index continuously variable between that of the polymer comprising the first zone and that of the polymer comprising the second zone the at least three zones being transparent and having no visible discontinuities between adjacent zones.

**Patentansprüche**

1. Mehrstärkenlinse (10), die zur Verwendung als Kontaktlinse oder implantierbare, intraokuläre Linse geeignet ist, welche eine erste (1), zweite (2) und dritte (3) Zone umfaßt, die durchsichtige Polymermaterialien mit einem ersten, zweiten beziehungsweise dritten Brechungsindex umfassen, wobei sich die dritte Zone (3) zwischen der ersten und zweiten Zone befindet und einen Brechungsindex besitzt, der zwischen dem ersten und zweiten Index stetig schwankt, so daß bei dem Brechungsindex zwischen den drei Zonen keine Unstetigkeit auftritt, dadurch gekennzeichnet, daß die Polymermaterialien wenigstens zwei Monomeren umfassen, die dem Monomerengemisch der die erste und zweite Zone umfassenden Polymermaterialien gemeinsam ist, wobei die Monomeren in unterschiedlichen molaren Anteilen vorliegen und die erste Zone eine ringförmige äußere Zone ist und die zweite Zone eine innere Zone ist.

2.  Mehrstärkenlinse gemäß Anspruch 1, in welcher sich der zweite Brechungsindex vom ersten Brechungsindex um nicht mehr als 0,1 und um nicht weniger als 0,01 unterscheidet.

3.  Mehrstärkenlinse gemäß Anspruch 1 oder Anspruch 2, die eine vierte und fünfte Zone umfaßt, wobei die vierte Zone die zweite Zone umgibt und ein Polymer mit einem vierten Brechungsindex umfaßt, das wenigstens zwei Monomeren umfaßt, die dem Monomerengemisch der die erste und zweite Zone umfassenden Polymermaterialien gemeinsam ist, wobei sich der vierte Brechungsindex vom zweiten Brechungsindex um nicht mehr als 0,1 und um nicht weniger als 0,02 unterscheidet, und sich die fünfte Zone zwischen der zweiten und vierten Zone befindet und ein Polymer mit wenigstens zwei Monomeren umfaßt, die dem Monomerengemisch der die erste, zweite und vierte Zone umfassenden Polymermaterialien gemeinsam sind und einen Brechungsindex besitzt, dessen Wert zwischen dem des zweiten Brechungsindex und dem des vierten Brechungsindex stetig veränderbar ist.

4.  Mehrstärkenlinse gemäß Anspruch 3, die eine sechste und eine siebte Zone umfaßt, wobei sich die sechste Zone zwischen der ersten und der vierten Zone befindet und ein Polymer umfaßt, das wenigstens zwei Monomeren umfaßt, die dem Monomerengemisch der die erste, zweite und vierte Zone umfassenden Polymermaterialien gemeinsam sind und einen sechsten Brechungsindex besitzt, der sich von dem vierten Brechungsindex um nicht mehr als 0,1 und um nicht weniger als 0,02 unterscheidet, und sich die siebte Zone zwischen der vierten und sechsten Zone befindet und ein Polymer umfaßt, das wenigstens zwei Monomeren umfaßt, die dem Monomerengemisch der die erste, zweite, vierte und sechste Zone umfassenden Polymermaterialien gemeinsam sind und einen siebten Brechungsindex besitzt, der zwischen dem vierten Brechungsindex und dem sechsten Brechungsindex stetig veränderbar ist.

5.  Mehrstärkenlinse gemäß einem der vorangehenden Ansprüche, wobei sich der erste und zweite Brechungsindex um nicht mehr als 0,05 und um nicht weniger als 0,02 unterscheiden.

6.  Mehrstärkenlinse gemäß einem der Ansprüche 3 bis 5, wobei sich der zweite und vierte Brechungsindex um nicht mehr als 0,05 und um nicht weniger als 0,02 unterscheiden.

7.  Mehrstärkenlinse gemäß einem der Ansprüche 4 bis 6, wobei sich der vierte und sechste Brechungsindex um nicht mehr als 0,05 und um nicht weniger als 0,02 unterscheiden.

8.  Mehrstärkenlinse gemäß einem der vorangehenden Ansprüche, wobei zwei der Monomeren in einem Molverhältnis von 80:20 bis 20:80 vorliegen.

9.  Mehrstärkenlinse gemäß Anspruch 8, wobei zwei der Monomeren in einem Molverhältnis von 70:30 bis 30:70 vorliegen.

10. Mehrstärkenlinse gemäß einem der vorangehenden Ansprüche, wobei das Polymermaterial, das jede Zone umfaßt, ein Gemisch dreier Monomeren umfaßt, wobei wenigstens zwei der drei Monomeren Monomeren sind, die dem Monomerengemisch des die Zonen umfassenden Polymermaterials gemeinsam sind.

11. Mehrstärkenlinse gemäß einem der vorangehenden Ansprüche, wobei das Polymer, das jede Zone umfaßt, eine Teilchengröße von weniger als 100 Nanometer besitzt.

12. Mehrstärkenlinse gemäß einem der Ansprüche 8 bis 11, wobei ein Monomer Methacrylsäuremethylester ist und ein zweites Monomer Methacrylsäuretrifluorethylester ist.

13. Mehrstärkenlinse gemäß einem der Ansprüche 8 bis 12, wobei ein Monomer Methacrylsäurecyclohexylester ist und ein zweites Monomer Methacrylsäuretrifluorethylester ist.

14. Verfahren zum Herstellen einer Mehrstärkenlinse gemäß einem der vorangehenden Ansprüche, welches das Polymerisieren wenigstens zweier Monomeren $M_1$ und $M_2$ unter Bilden eines Polymers in Folienform, das eine erste Zone mit einem ersten Brechungsindex besitzt, das Ausschneiden von Material aus der ersten Zone und, um eine zweite Zone zu bilden, das Ersetzen des ausgeschnittenen Materials durch Zufügen eines Monomerengemischs umfaßt, das wenigstens die Monomeren $M_1$ und $M_2$ in einem Molverhältnis enthält, das nach der Polymerisation unter Bilden eines Polymers mit einem Brechungsindex ausreicht, der sich von dem Brechungsindex des die erste Zone umfassenden Polymers um nicht mehr als 0,1 und um nicht weniger als 0,02 unterscheidet, wodurch zwischen der ersten und zweiten Zone eine dritte Zone gebildet wird, die ein Polymer mit wenigstens zwei Monomeren umfaßt, die dem Monomerengemisch der die erste und zweite Zone umfassenden Polymermaterialien gemeinsam sind und einen Brechungsindex besitzt, der zwischen demjenigen des die erste Zone umfassenden Polymers und demjenigen des die vierte Zone umfassenden Polymers stetig veränderbar ist, wobei die wenigstens drei Zonen durchsichtig sind und keine sichtbaren Unstetigkeiten zwischen benachbarten Zonen besitzen.

**Revendications**

1. Lentille multifocale (10) utilisable comme lentille de contact ou lentille intra-oculaire implantable, qui comprend une première (1), une deuxième (2) et une troisième (3) zones en matières polymères transparentes ayant un premier, un deuxième et un troisième indices de réfraction respectivement, la troisième zone (3) étant située entre la première et la deuxième zones et ayant un indice de réfraction qui varie de façon continue entre le premier indice et le deuxième indice, de sorte qu'aucune discontinuité de l'indice de réfraction n'apparaît entre les trois zones, caractérisée en ce que les matières polymères comprennent au moins deux monomères communs au mélange de monomères des matières polymères constituant les première et deuxième zones, les monomères étant présents dans des proportions molaires différentes, la première zone étant une zone extérieure annulaire et la deuxième zone étant une zone intérieure.

2. Lentille multifocale suivant la revendication 1, dans laquelle le deuxième indice de réfraction diffère du premier indice de réfraction par 0,1 au maximum et 0,01 au minimum.

3. Lentille multifocale suivant la revendication 1 ou la revendication 2, comprenant une quatrième et une cinquième zones, dans laquelle la quatrième zone entoure la deuxième zone et est en un polymère ayant un quatrième indice de réfraction et comportant au moins deux monomères communs au mélange de monomères des matières polymères constituant les première et deuxième zones, ledit quatrième indice de réfraction étant différent du deuxième indice de réfraction de 0,1 au maximum et de 0,02 au minimum ; et la cinquième zone est située entre les deuxième et quatrième zones et elle est en un polymère ayant au moins deux monomères communs au mélange de monomères des matières polymères constituant les première, deuxième et quatrième zones et ayant un indice de réfraction dont la valeur varie de façon continue entre celle du deuxième indice de réfraction et celle du quatrième indice de réfraction.

4. Lentille multifocale suivant la revendication 3, comprenant une sixième et une septième zones, dans laquelle la sixième zone est située entre la première zone et la quatrième zone et est en un polymère comportant au moins deux monomères communs au mélange de monomères des matières polymères constituant les première, deuxième et quatrième zones et ayant un sixième indice de réfraction qui diffère du quatrième indice de réfraction de 0,1 au plus et de 0,02 au moins ; et la septième zone est située entre la quatrième zone et la sixième zone et elle est en unpolymère contenant au moins deux monomères communs au mélange de monomères des matières polymères constituant les première, deuxième, quatrième et sixième zones, et ayant un septième indice de réfraction qui varie de façon continue entre la valeur du quatrième indice de réfraction et celle du sixième indice de réfraction.

5. Lentille multifocale suivant une quelconque des revendications précédentes, dans laquelle lesdits premier et deuxième indices de réfraction diffèrent au plus de 0,05 et au moins de 0,02.

6. Lentille multifocale suivant une quelconque des revendications 3 à 5, dans laquelle les deuxième et quatrième indices de réfraction diffèrent au plus de 0,05 et au moins de 0,02.

7. Lentille multifocale suivant une quelconque des revendications 4 à 6, dans laquelle les quatrième et sixième indices de réfraction diffèrent au plus de 0,05 et au moins de 0,02.

8. Lentille multifocale suivant une quelconque des revendications précédentes, dans laquelle deux des monomères sont présents dans un rapport molaire de 80:20 à 20:80.

9. Lentille multifocale suivant la revendication 8, dans laquelle deux des monomères sont présents dans un rapport molaire de 70:30 à 30:70.

10. Lentille multifocale suivant une quelconque des revendications précédentes, dans laquelle la matière polymère constituant chaque zone comprend un mélange de trois monomères, au moins deux des trois monomères étant des monomères communs au mélange de monomères des matières polymères constituant les zones.

11. Lentille multifocale suivant une quelconque des revendications précédentes, dans laquelle le polymère constituant chaque zone a une dimension de particule inférieure à 100 nanomètres.

12. Lentille multifocale suivant une quelconque des revendications 8 à 11, dans laquelle un monomère est le métal méthacrylate et un deuxième monomère est le trifluoro-éthylméthacrylate.

13. Lentille multifocale suivant une quelconque des revendications 8 à 12, dans laquelle un monomère est le cyclohexyl méthacrylate et un deuxième monomère est le tri-fluoroéthylméthacrylate.

14. Méthode de fabrication d'une lentille multifocale suivant une quelconque des revendications précédentes, qui comprend la polymèrisation d'au moins deux monomères $M_1$ et $M_2$ pour produire un polymère sous forme de feuille, comprenant une première zone ayant un premier indice deréfraction, l'excision de matière de la première zone et, afin de former une deuxième zone, le remplacement de la matière excisée par addition d'un mélange de monomères qui contient au moins des monomères $M_1$ et $M_2$ dans un rapport molaire suffisant, lors de la polymérisation, pour produire un polymère ayant un indice de réfraction qui diffère de l'indice de réfraction du polymère constituant la première zone de 0,1 au plus et 0,01 au moins, de sorte qu'une troisième zone est formée entre les première et deuxième zones et elle est constituée d'un polymère ayant au moins deux monomères communs au mélange de monomères des matières polymères constituant les première et deuxième zones et elle a un indice de réfraction qui varie de façon continue entre celui du polymère constituant la première zone et celui du polymère constituant la deuxième zone, lesdites au moins trois zones étant transparentes et n'ayant pas de discontinuités visibles entre zones adjacentes.

Figure 1

Figure 2

Figure 3